# EUROPEAN PATENT APPLICATION

(11) **EP 4 447 272 A1**
(43) Date of publication of application: **16.10.2024**
(21) Application number: 21944428.8
(22) Date of filing: 09.12.2021
(51) Int. Cl.: H02K 1/276

(54) **ROTOR OF ROTARY ELECTRIC MACHINE**

(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: HISADA, Hideki, Kawasaki-shi, Kanagawa 2120013 (JP); KANO, Masaru, Kawasaki-shi, Kanagawa 2120013 (JP); MAKINO, Hiroaki, Kawasaki-shi, Kanagawa 2120013 (JP); IWATA, Yoshiyuki, Kawasaki-shi, Kanagawa 2120013 (JP)
(74) Representative: AWA Sweden AB
(86) International application number: PCT/JP2021/045235
(87) International publication number: WO 2023/105701

(57) **Abstract**

According to one embodiment, a rotor of a rotary electrical machine comprises a rotor core 24 which includes a plurality of magnetic poles arranged in a circumferential direction and at least two magnet holding slots 34 arranged at an interval in the circumferential direction for each of the magnetic poles, and a plurality of permanent magnets M arranged in the magnet holding slots, respectively. At least one of the magnet holding slots includes a magnet loading area 34a where the permanent magnet is arranged, a magnetic cavity 34c located between the magnet loading area and an outer circumference of the rotor core, and an opening 40 which opens to the magnetic cavity and the outer circumference of the rotor core. At each of the magnetic poles, the rotor core comprises a protruding portion 52a having an outer surface which extends to the opening continuously with an outer circumferential surface of the rotor core, an end surface which intersects the outer surface at angle 90±10° to face the opening, and an inner surface which intersects the end surface to form an edge of the magnetic cavity. A circumferential width of the opening is smaller than a circumferential width of the magnetic cavity.

## Description

### Technical Field

Embodiments described herein relate generally to a rotor of a rotary electrical machine including a permanent magnet.

### Background Art

A permanent magnet type rotary electrical machine comprises a cylindrical stator and a columnar rotor that is rotatably supported inside the stator. The rotor comprises a rotor core and a plurality of permanent magnets embedded in the rotor core.

As such a permanent magnet type rotary electrical machine, a rotary electrical machine configured such that two magnets per magnetic pole are arranged in a V-letter shape and magnet slots accommodating the magnets are opened to the surface of the rotor core has been proposed. In the rotary electrical machine configured as described above, magnetic flux leakage of the magnets in a bridge of the rotor core can be reduced and a magnet torque generated per magnet weight can be increased. Alternatively, it is possible to reduce the magnet weight while maintaining the torque of the rotary electric device.

However, there is concern that wind loss (loss caused by frictional resistance between the rotor and the air) generated during rotation may increase in the rotary electrical machine configured as described above.

### Citation List

### Patent Literatures

Patent Literature 1: JP 2014-50208 A
Patent Literature 2: JP 2018-85819 A
Patent Literature 3: JP 2004-104962 A
Patent Literature 4: JP 5370433 B
Patent Literature 5: JP 5412978 B
Patent Literature 6: JP 3996417 B

### Summary of Invention

### Technical Problem

Embodiments described herein aim to provide a rotor of a rotary electrical machine capable of suppressing windage loss while reducing magnetic flux leakage.

### Solution to Problem

According to an embodiment, a rotor of a rotary electrical machine comprises a rotor core which includes a plurality of magnetic poles arranged in a circumferential direction about a central axis and at least two magnet holding slots arranged at an interval in the circumferential direction for each of the magnetic poles, and a plurality of permanent magnets arranged in the magnet holding slots, respectively. At least one of the magnet holding slots includes a magnet loading area where the permanent magnet is arranged, a magnetic cavity located between the magnet loading area and an outer circumference of the stator core, and an opening which opens to the magnetic cavity and the outer circumference of the rotor core. At each of the magnetic poles, the rotor core comprises a protruding portion having an outer surface which extends to the opening continuously with an outer circumferential surface of the rotor core, an end surface which intersects the outer surface at angle 90±10° to face the opening, and an inner surface which intersects the end surface to form a side edge of the magnetic cavity, a width in the circumferential direction of the opening being smaller than a width in the circumferential direction of the magnetic cavity.

### Brief Description of Drawings

FIG. 1 is a transverse cross-sectional view showing a permanent magnet type rotary electrical machine according to a first embodiment.
FIG. 2 is a partially enlarged transverse cross-sectional view showing the rotary electrical machine.
FIG. 3 is an enlarged cross-sectional view of the rotor, showing a flux barrier portion of the rotor.
FIG. 4 is a view schematically showing windage loss (airflow condition occurring inside the flux barrier) of the rotor of the first embodiment and the rotor of the comparative example.
FIG. 5 is a partially enlarged transverse cross-sectional view showing a rotary electrical machine according to a second embodiment.
FIG. 6 is a partially enlarged transverse cross-sectional view showing a rotary electrical machine according to a third embodiment.

### Mode for Carrying Out the Invention

Embodiments will be described hereinafter with reference to the accompanying drawings. The same reference numerals attached to common constituent elements throughout the embodiments, and overlapping descriptions are simplified or omitted. In addition, each drawing is a schematic diagram for promoting the embodiments and their understanding, and the shapes, dimensions, ratios, etc., are different from those of an actual device, but their design can be changed as appropriate in consideration of the following descriptions and publicly known techniques.

### (First Embodiment)

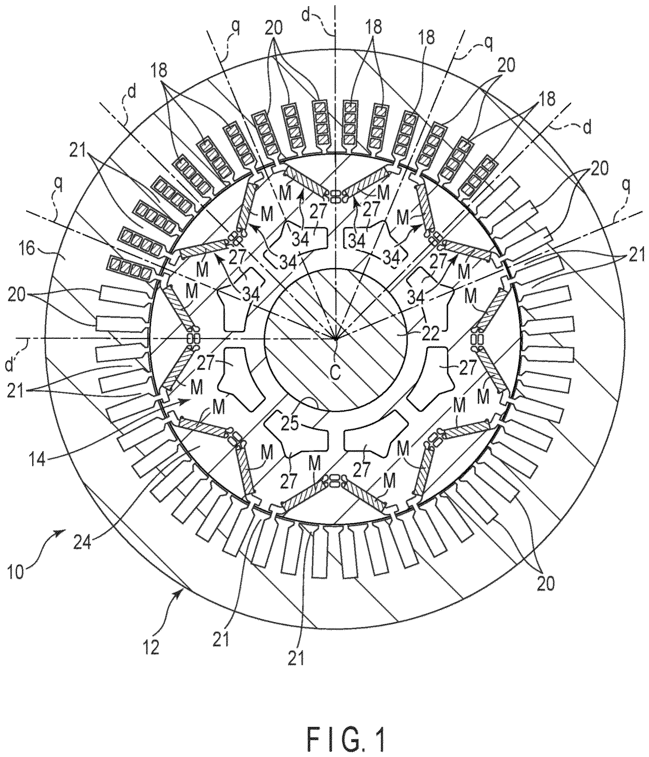

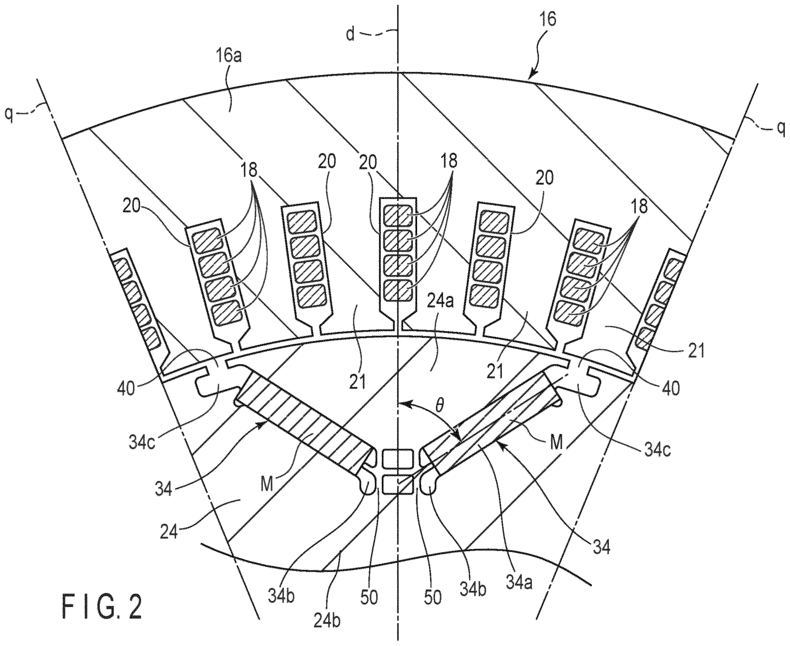

FIG. 1 is a transverse cross-sectional view showing a permanent magnet type rotary electrical machine according to a first embodiment, and FIG. 2 is a partially enlarged transverse cross-sectional view showing the rotary electrical machine.

As shown in FIG. 1, a rotary electrical machine 10 is configured as, for example, an inner rotor type rotary electrical machine. The rotary electrical machine 10 comprises an annular or cylindrical stator 12 supported by a fixed frame (not shown), and a rotor 14 supported rotatably about a central axis C on the inner side of the stator and coaxially with the stator 12. The rotary electrical machine 10 is suitably applied to, for example, a drive motor or a generator in a hybrid vehicle (HEV) or an electric vehicle (EV).

The stator 12 comprises a cylindrical stator core 16 and an armature wire (coil) 18 wound around the stator core 16. The stator core 16 is configured by concentrically stacking a large number of annular electromagnetic steel sheets (core pieces) of a magnetic material, for example, silicon steel or the like. A plurality of slots 20 are formed in an inner circumferential portion of the stator core 16. The plurality of slots 20 are arranged at regular intervals in the circumferential direction. Each of the slots 20 opens to an inner circumferential surface of the stator core 16 and extends radially from the inner circumferential surface. In addition, each of the slots 20 extends over the entire axial length of the stator core 16. By forming a plurality of slots 20, the outer circumferential portion of the stator core 16 constitutes an annular yoke portion 16a, and the inner circumferential portion of the stator core 16 constitutes a plurality of (for example, forty-eight in the embodiment) stator teeth 21 that face the rotor 14. The plurality of stator teeth 21 extend radially from the yoke portion 16a toward the central axis C. The armature wire 18 is inserted into the plurality of slots 20 and wound around each of the stator teeth 21. A predetermined flux linkage is formed on the stator 12 (stator teeth 21) by making a current flow to the armature wire 18.

The rotor 14 includes a columnar shaft (rotary shaft) 22 having both ends rotatably supported by bearings (not shown), a cylindrical rotor core 24 fixed substantially in the center of the shaft 22 in the axial direction, and a plurality of permanent magnets M embedded in the rotor core 24. The rotor 14 is arranged coaxially inside the stator 12 with a slight gap (air gap) interposed therebetween. In other words, an outer circumferential surface of the rotor 14 is opposed to an inner circumferential surface of the stator 12 with a slight gap interposed therebetween. The rotor core 24 includes an inner hole 25 formed coaxially with the central axis C. The shaft 22 is inserted and fitted into the inner hole 25 and extends coaxially with the rotor core 24. The rotor core 24 is configured as a stacked layer body formed by concentrically stacking a large number of magnetic sheets, for example, annular electromagnetic steel sheets (core pieces) of silicon steel or the like. The rotor core 24 has the central axis C extending in the stacking direction of the core pieces and an outer circumferential surface coaxial with the central axis C.

In the embodiment, the rotor 14 includes a plurality of magnetic poles, for example, eight magnetic poles arranged circumferentially around the central axis C. In the rotor core 24, an axis extending in the radial direction of the rotor core 24 through the central axis C and a boundary between circumferentially adjacent magnetic poles is referred to as a q-axis, and an axis electrically separated from the q-axis at 90° in the circumferential direction, i.e., an axis passing through a circumferential center of the magnetic poles and the central axis C is referred to as a d-axis. A direction in which the flux linkage formed by the stator 12 can easily flow is the q-axis. The d-axis and the q-axis are provided alternately in the circumferential direction of the rotor core 24 and at a predetermined phase. One magnetic pole of the rotor core 24 indicates a region between two q-axes adjacent in the circumferential direction (1/8 circumferential angle region). The rotor core 24 is thereby configured to have eight poles (magnetic poles).

As shown in FIG. 1, a plurality of permanent magnets, for example, two permanent magnets M are embedded in the rotor core 24 for each magnetic pole. Magnet holding slots (often referred to as magnet holding cavities or magnet embedding holes) 34 for loading the permanent magnets M are formed on both sides of each d-axis, in the circumferential direction of the rotor core 24. Two permanent magnets M are loaded and arranged in the magnet holding slots 34, respectively, and, for example, fixed to the rotor core 24 by an adhesive or the like.

The rotor core 24 includes a plurality of cavity holes (cavities) 27 each formed at a position close to the inner hole 25 and on the q-axis over two magnetic poles. Each of the cavity holes 27 extends through the rotor core 24 in the axial direction.

As shown in FIG. 2, each of the magnet holding slots 34 is formed through the rotor core 24 in the axial direction. When viewed in a transverse section perpendicular to the central axis C of the rotor core 24, the two magnet holding slots 34 are formed and arranged to have linear symmetry about the d-axis, for example, arranged in an approximately V-letter shape. Each of the magnet holding slots 34 includes an opening end that is opened or opens to an outer circumference of the rotor core 24 and a closed end (other end) that is located near the d-axis and closed.

Each of the magnet holding slots 34 that functions as a flux barrier includes a rectangular magnet loading area 34a corresponding to the cross-sectional shape of the permanent magnet M, an inner peripheral side cavity (magnetic cavity) 34b extending from the inner circumferential edge of the magnet loading area 34a to the d-axis side, and an outer peripheral side cavity (magnetic cavity) 34c extending from an outer circumferential edge of the magnet loading area 34a and opening to the outer circumference of the rotor core 24. The outer peripheral side cavity 34c extends from the magnet loading area 34a to the open end (opening 40) of the slot.

The magnet holding slot 34 extends at an angle θ smaller than 90° with respect to the d-axis. In other words, the magnet holding slot 34 is provided to be slanted such that the distance from the d-axis becomes gradually longer from the inner circumferential edge toward the outer circumferential edge and that the distance from the outer circumferential surface of the rotor core 24 becomes gradually shorter from the inner circumferential edge toward the outer circumferential edge. The angle θ is not limited to the example shown in the drawing, but can be changed arbitrarily.

The permanent magnet M is formed as, for example, an elongated flat plate with a rectangular transverse cross-section and is loaded in the magnet loading area 34a of the magnet holding slot 34. The permanent magnet M has a length approximately equal to the axial length of the rotor core 24. Each of the permanent magnets M is embedded over a substantially entire length of the rotor core 24. The permanent magnet 26 may be configured by combining a plurality of magnets divided in the axial direction (longitudinal direction) and, in this case, the permanent magnet 26 is formed such that the total length of the plurality of magnets is approximately equal to the axial length of the rotor core 24.

The two permanent magnets M located on both sides of the d-axis are arranged in a substantially V-letter shape. In other words, the two permanent magnets M are arranged to be slanted at an angle θ such that the distance from the d-axis becomes gradually longer from the inner circumferential edge toward the outer circumferential edge and that the distance from the outer circumferential surface of the rotor core 24 becomes gradually shorter from the inner circumferential edge toward the outer circumferential edge.

Each of the permanent magnets M is magnetized in the direction perpendicular to the long side. The two permanent magnets 26 located on both circumferential sides of the d-axis, i.e., the two permanent magnets 26 constituting one magnetic pole are arranged such that their magnetization directions are the same as each other. In addition, the two permanent magnets 26 located on both circumferential side of each q-axis such that their magnetization directions are opposite to each other. In the embodiment, the rotary electrical machine 10 constitutes a permanent magnet embedded type rotary electrical machine of eight magnetic poles (four pole pairs) in which front and back sides of the north and south poles of the permanent magnets M are alternately arranged for each of adjacent magnetic poles.

As shown in FIG. 2, the rotor core 24 comprises, at each magnetic pole, a fan-shaped outer circumferential area (first core portion) 24a located between the two magnet holding slots 34, an inner circumferential area (second core portion) between the magnet holding slots 34 and the inner hole 25 (shaft 22)) 24b of the rotor core 24, and two columnar bridges 50 formed by connecting the first core portion 24a and the second core portion 24b. The bridges 50 are formed between the two inner peripheral side cavities 34b of the two magnet holding slots 34 and extend along the d-axis. The number of bridges 50 is not limited to two, but one or three or more bridges may be provided.

The configuration of the rotor core 24 and the magnet holding slots 34 will be described in more detail.

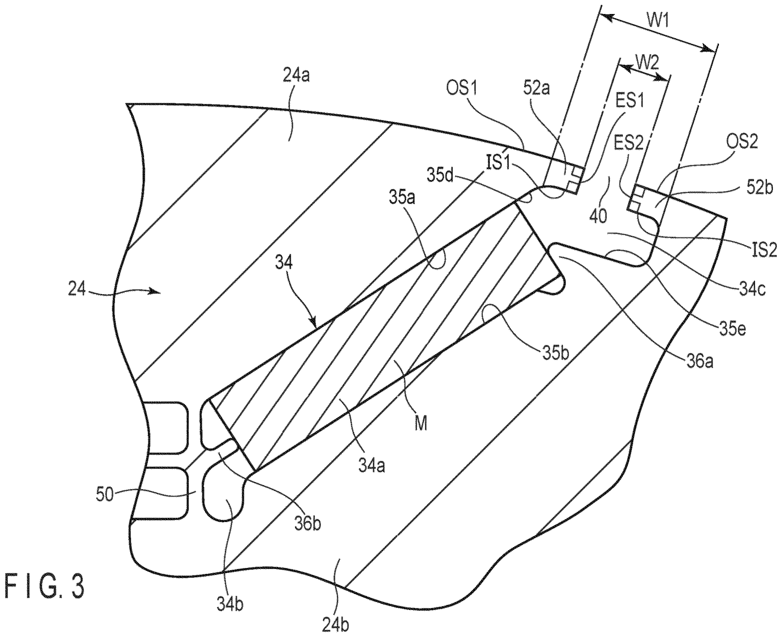

FIG. 3 is a cross-sectional view of the rotor core in which one of the magnet holding slots 34 is enlarged.

As shown in the drawing, the magnet loading area 34a of the magnet holding slot 34 has a rectangular shape corresponding to the permanent magnet M, and is formed between a flat inner edge (inner circumferential long side) 35b and a flat outer edge (outer circumferential long side) 35a which is parallel and opposed to the inner edge 35b at an interval interposed therebetween. The inner edge 35b and the outer edge 35a extend to be slanted at the above-described angle θ with respect to the d-axis. The rotor core 24 includes a holding protrusion (step) 36a that protrudes from the inner edge 35b of the magnet holding slot 34 into the magnet holding slot 34, at the outer peripheral side end of the magnet loading area 34a.

The inner peripheral side cavity 34b extends from the inner circumferential end (d-axis side end) of the magnet loading area 34a toward the d axis. The inner peripheral side cavity 34b is substantially parallel and opposed to the bridge 50. The rotor core 24 includes a holding protrusion 36b that protrudes from an end surface of the inner peripheral side cavity 34b, or the bridge 50 in this example, into the inner peripheral side cavity 34b. The holding protrusion 36b protrudes from the bridge 50 to the vicinity of one of ends of the magnet loading area 34a.

The outer peripheral side cavity 34c extends from the outer circumferential edge of the magnet loading area 34a (the end on the outer circumferential side of the rotor core) toward the outer circumferential surface of the rotor core 24 and is opened or opens to the outer circumference of the rotor core 24 through the opening 40. The outer peripheral side cavity 34c is defined between the outer edge 35d which extends from one of ends of the outer edge 35a of the magnet loading area 34a toward the outer circumference of the rotor core 24 so as to be flush with the outer edge 35a, and the inner edge 35b which extends from one of ends of the inner edge 35b of the magnet loading area 34a or the protruding edge of the holding projection 36a in this example toward the outer circumferential side of the rotor core 24.

The outer edge 35d bends to an inner edge 35e side and extends circumferentially to the opening 40, in the vicinity of the outer circumferential surface of the rotor core 24. The circumferentially extending portion of the outer edge 35d constitutes an inner surface IS1 of a first protruding portion 52a, which will be described later.

The inner edge 35e is higher than the inner edge 35b, i.e., closer to the outer edge 35d side by the height of the holding projection 36a, and extends from the protruding edge of the holding projection 36a in the substantially circumferential direction. In addition, the inner edge 35e bends toward the outer circumferential surface side of the rotor core 24 at a middle part and then extends to the vicinity of the outer circumferential surface. Furthermore, the inner edge 35e bends toward the outer edge 35d side and then extends to the opening 40 in the circumferential direction. The circumferentially extending portion of the inner edge 35e constitutes an inner surface IS2 of a second protruding portion 52b, which will be described later.

In the outer peripheral side cavity 34c, a circumferential width W2 of the opening 40 is narrower than a circumferential width (interval between the outer edge 35d and the inner edge 35e) W1 of the area on the magnet loading area 34a side. The opening 40 opens over the entire axial length of the rotor core 24 with the above-described width W2.

The outer edges 35a and 35d and the inner edges 35b and 35e of the magnet holding slot 34 correspond to inner walls of the magnet holding slot 34.

The first core portion 24a of the rotor core 24 includes a first protruding portion 52a protruding toward the opening 40 of the outer peripheral side cavity 34c, and the second core portion 24b includes a second protruding portion 52b protruding toward the opening 40 of the outer peripheral side cavity 34c.
The first protruding portion 52a is opposed to the second protruding portion 52b in the circumferential direction with the opening 40 interposed therebetween. In other words, the circumferential width W2 of the opening 40 is formed to be narrower than the circumferential width W1 of the outer peripheral side cavity 34c by providing the first protruding portion 52a and the second protruding portion 52b.

The first protruding portion 52a has an outer surface (first outer surface) OS1 that extends continuously with the outer circumferential surface of the rotor core 24 to the opening 40 in the circumferential direction, a first end surface ES1 that intersects the outer surface OS1 at approximately right angles (90±10°), and an inner surface (first inner surface) IS1 that is opposed to the outer surface OS1 at an interval to intersect the first end surface ES1 at approximately right angles (90±10°). The inner surface IS1 forms a part of an outer edge 35d of the outer peripheral side cavity 34c and is connected to the outer edge 35d.

In the embodiment, the first end surface ES1 is a straight line, and a tangent line at the intersection of a circumcircle which is circumscribed to the outer circumstance of the stator core 24 about the central axis C of the stator core 24 and an extension line of the first end surface ES1 is orthogonal to the first end surface ES1.

The second protruding portion 52b has an outer surface (second outer surface) OS2 that extends continuously with the outer circumferential surface of the rotor core 24 to the opening 40 in the circumferential direction, a second end surface ES2 that intersects the outer surface OS2 at approximately right angles (90±10°), and an inner surface (second inner surface) IS2 that is opposed to the outer surface OS2 at an interval to intersect the second end surface ES2 at approximately right angles (90±10°). The inner surface IS2 forms a part of the inner edge 35e of the outer peripheral side cavity 34c and is connected to the inner edge 35e. The inner edge 35e of the outer peripheral side cavity 34c is connected to the inner edge 35b of the magnet loading area 34a via the holding projection 36a.

In the embodiment, the second end surface ES2 is a straight line, and a tangent line at the intersection of a circumcircle which is circumscribed to the outer circumstance of the stator core 24 about the central axis C of the stator core 24 and an extension line of the second end surface ES2 is orthogonal to the second end surface ES2.

The first protruding portion 52a and the second protruding portion 52b extend over the entire axial length of the stator core 24. The first end surface ES1 of the first protruding portion 52a and the second end surface ES2 of the second protruding portion 52b are substantially parallel and opposed to each other with an interval interposed therebetween. The opening 40 is defined between the first end surface ES1 and the second end surface ES2, and the opening 40 is opened to the outer peripheral side cavity 34 and to the outer peripheral surface of the rotor core 14. In other words, the outer peripheral side cavity 34c is opened to the outer circumference of the stator core 24 through the opening 40. The opening 40 extends over the entire axial length of the rotor core 24.

The electromagnetic steel sheet constituting the rotor core 24 is processed in the following process. First, a disk-shaped electromagnetic steel plate including the inner hole 25, the cavity hole 27, and the plurality of magnet holding slots 34 is punched in a state in which a bridge is left between the magnet holding slots and the outer circumferential surface. Then, the opening 40 having the width W2 is formed by punching an area corresponding to the opening in the bridge.

When the opening 40 is punched as described above, corner portions of each of the protruding portions 52a and 52b may not be shaped in a square consisting of two perfect straight lines due to shear drop of punching or the like. For example, the corner portions may be shaped in an arc having a radius of curvature of 0.2 mm or less. In other words, two straight lines forming the corner portions are connected by the arc of R = 0 to 0.2 mm.

For this reason, in the embodiment, the substantially right-angled (90±10°) corner portions of the protruding portions 52a and 52b are set to include the arc-shaped corner portions of R = 0 to 0.2 mm.

The permanent magnet M has a rectangular cross-sectional shape, and the cross-section has a pair of long sides parallel and opposed to each other and a pair of short sides opposed to each other. The permanent magnet M is loaded into the magnet loading area 34a of the magnet holding slot 34, with one long side adjacent and opposed to or abutting on the outer edge 35a and the other long side adjacent and opposed to or abutting on the inner edge 35b. One end of the outer circumferential short side of the permanent magnet M abuts on the holding projection 36a. The other short side of the permanent magnet M abuts on the holding projection 36b. The permanent magnet M is thereby held in the magnet loading area 34a in a state in which a position in the longitudinal direction is determined.

The permanent magnet 26 may be fixed to the rotor core 24 by an adhesive or the like. The cross-sectional shape of the permanent magnet M is not limited to a rectangular shape (rectangle), but may be a parallelogrammatic shape.

The inner peripheral side cavity 34b and the outer peripheral side cavity 34c of the magnet holding slots 34 function as magnetic cavities (flux barriers) that suppress magnetic flux leakage from both longitudinal ends of the permanent magnet 26 to the rotor core 24, and contribute to the reduction in weight of the rotor core 24. Furthermore, since the outer peripheral side cavity 34c is opened to the outer circumference of the rotor core 24 through the opening 40, the outer peripheral side cavity 34c suppresses short circuit of the magnetic flux in the rotor core 24. Thus, the performance of the rotary electrical machine 10 can be improved and the reduction in size and weight of the rotary electrical machine 10 can be attempted.

By providing the first protruding portion 52a and the second protruding portion 52b in which corner portions on the outer surface side and the inner surface side of the protruding ends are formed at substantially right angles, at the open end of the outer peripheral side cavity 34c, outside air flowing into the outer peripheral side cavity 34c through the opening 40 can be reduced, the airflow occurring inside the outer peripheral side cavity 34c can be suppressed, and reduction in wind loss can be attempted.

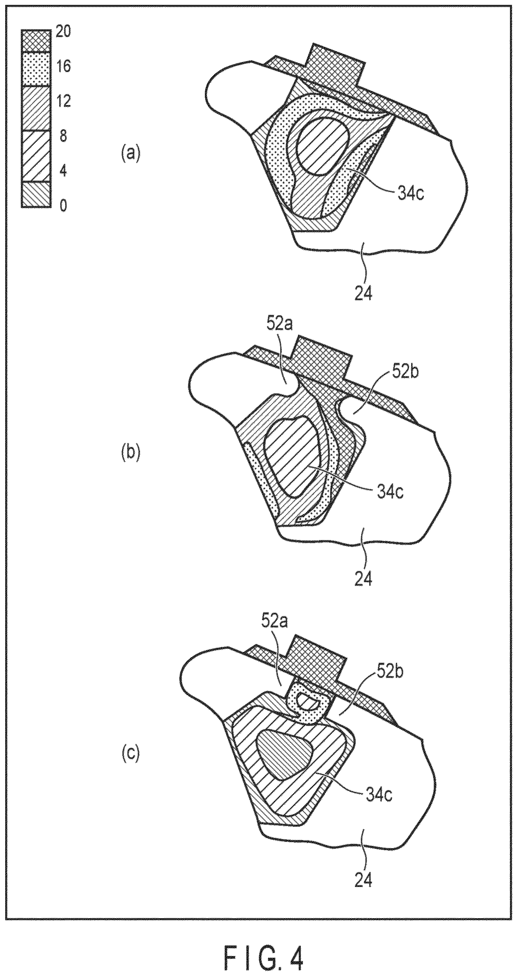

FIG. 4 is a view schematically showing a state of generation of airflow in the outer peripheral side cavity of the rotor according to comparative example 1, comparative example 2, and the embodiment. As shown in FIG. 4(a), the rotor according to comparative example 1 does not comprise a protruding portion, and the circumferential width of the opening is equal to the circumferential width of the outer peripheral side cavity. As shown in FIG. 4(b), in the rotor according to comparative example 2, the corner portions of protruding ends of the first protruding portion 52a and the second protruding portion 52b are not shaped at right angles, but curved. FIG. 4 shows the difference in strength of airflow (speed of airflow) while variously changing the hatching. FIG. 4 shows a hatching portion in which the airflow is stronger (air flows at a higher speed) at an upper stage and the airflow is weaker (airflow does not move) at a lower stage, in hatching portions vertically arranged at five stages. FIG. 4 shows a state in which the rotor rotates counterclockwise.

As shown in FIG. 4(a), in the rotor according to comparative example 1, a high-speed airflow occurs near the opening end of the outer peripheral side cavity 34c, and a relatively strong (fast) airflow also occurs inside the outer peripheral side cavity 34c. As shown in FIG. 4(b), in the rotor according to comparative example 2, strong (fast) gas flows into the outer peripheral side cavity 34c through the opening, and relatively strong airflow occurs inside the outer peripheral side cavity 34c.

In contrast, as shown in FIG. 4(c), it can be understood that in the rotor according to the embodiment, a small amount of weak airflow occurs inside the outer peripheral side cavity 34c, but no airflow occurs and air does not move at most part. In other words, it can be understood that the air flowing from the opening 40 into the outer peripheral side cavity 34c is significantly reduced.

According to the rotor 14 of the rotary electrical machine 10 according to the first embodiment configured as described above, since one end of the magnet holding slots 34 is opened to the outer circumference of the rotor core 24 through the opening 40, the leakage flux of the permanent magnet can be reduced and the magnet torque generated per magnet weight can be increased. Furthermore, the airflow occurring inside the outer peripheral side cavity (flux barrier) can be suppressed and the windage loss of the rotor 14 can be reduced by providing the first and second protruding portions in which at least the outer circumferential tips and corner portions are formed at substantially right angles, at the opening portion. Thus, the operating efficiency of the rotary electrical machine 10 can be improved and the improvement of torque and power can be attempted.

As a result, according to the first embodiments, the rotary electrical machine and the rotor capable of suppressing windage loss while reducing magnetic flux leakage can be obtained.

Next, a rotor of a rotary electric device according to another embodiment will be described. In another embodiment to be described below, portions equivalent to those of the first embodiment are denoted by the same reference numbers and detailed explanation is omitted or simplified, such explanation being mainly given to portions different from those of the first embodiment.

### (Second Embodiment)

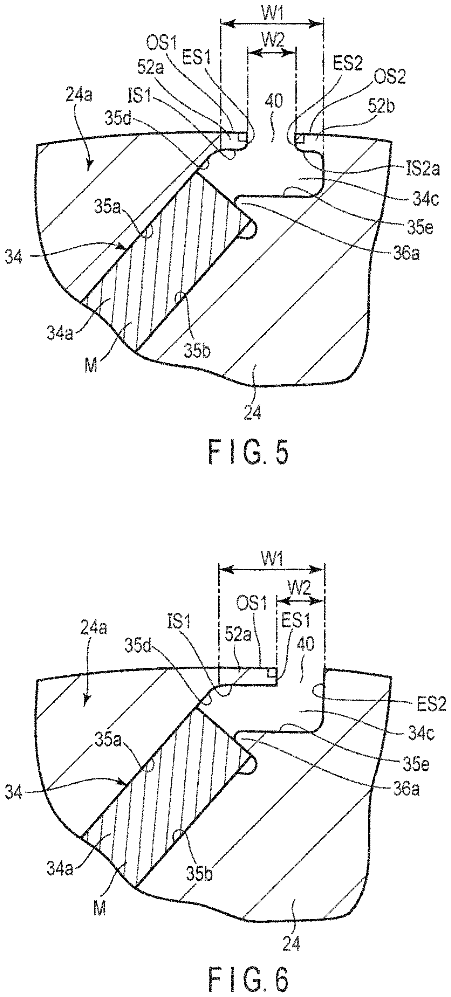

FIG. 5 is a cross-sectional view of a rotor core in which a magnet holding slot of the rotor of the rotary electrical machine according to a second embodiment is enlarged.

As shown in the drawing, according to the second embodiment, a tip corner portion on an outer circumferential side, i.e., a corner portion where an outer surface OS1 and an end surface ES1 intersect, at a first protruding portion 52a of a rotor core 24, is formed at approximately right angles (90±10°). An inner circumferential tip, a corner portion, i.e., a corner portion where an inner surface IS1 and the end surface ES1 intersect, are rounded in an arcuate shape.

At a second protrusion 52b, the tip corner portion on the outer circumferential side, i.e., a corner portion where an outer surface OS2 and an end surface ES2 intersect is formed at approximately right angles (80 to 90 degrees). An inner circumferential tip, a corner portion, i.e., a corner portion where an inner surface IS2 and the end surface ES2 intersect, are rounded in an arcuate shape.

In the second embodiment, the other structure of a rotor 14 is the same as the rotor according to the above-described first embodiment.

At the rotor according to the second embodiment configured as described above, too, airflow occurring inside an outer peripheral side cavity (flux barrier) 34c can be suppressed and windage loss of the rotor can be reduced. In other words, at a protruding portion of the rotor, the occurrence of airflow can be suppressed and the reduction in windage loss can be reduced by forming the tip and corner portion on at least the outer circumferential side at approximately right angles.

### (Third Embodiment)

FIG. 6 is a cross-sectional view of a rotor core in which a magnet holding slot of a rotor of the rotary electrical machine according to a third embodiment is enlarged.

As shown in the drawing, according to the third embodiment, a rotor core 24 of a stator includes only a first protruding portion 52a, and a second protruding portion is not provided. When a rotational direction of the rotor is counterclockwise, for example, the protruding portion is provided only on a downstream side of the rotational direction, with respect to an opening 40 of an outer peripheral side cavity 34c. In other words, a first core portion 24a of a stator core 24 integrally includes a first protruding portion protruding toward the opening 40.

The first protruding portion 52a has an outer surface OS1 that extends continuously with an outer circumferential surface of the rotor core 24, a first end surface ES1 that intersects the outer surface OS1 at approximately right angles (80 to 90 degrees), and an inner surface IS1 that is opposed to the outer surface OS1 at an interval to intersect the first end surface ES1 at approximately right angles (90±10°).
The inner surface IS1 forms a part of an outer edge 35d of the outer peripheral side cavity 34c and is connected to the outer edge 35d. Thus, at the first protruding portion 52a, a tip corner portion on an outer circumferential side, i.e., a corner portion where the outer surface OS1 and the end surface ES1 intersect is formed at approximately right angles, and the tip corner portion on the inner circumferential side, i.e., the corner portion where the inner surface IS1 and the end surface ES1 intersect, is formed at substantially right angles. As described above, the corner portion on the inner circumferential side may be rounded in an arcuate shape.

An inner edge 35e of the outer peripheral side cavity 34c bends toward the outer circumferential side and then extends substantially straight to the outer circumferential surface. The inner edge 35e intersects the outer circumferential surface of the rotor core 24 at substantially right angles. An opening 40 is formed between the end surface ES1 of the first protruding portion 52a and the inner edge 35e. A circumferential width W2 of the opening 40 is formed to be narrower than a circumferential width W1 of the outer peripheral side cavity 34c.

In the third embodiment, the other structure of a rotor 14 is the same as the rotor according to the above-described first embodiment.

At the rotor according to the third embodiment configured as described above, too, airflow occurring inside an outer peripheral side cavity (flux barrier) 34c can be suppressed and windage loss of the rotor can be reduced. In other words, the airflow occurring inside the flux barrier can be suppressed and the windage loss can be reduced by providing a protruding portion on at least one of the circumferential direction of the opening and forming at least the outer circumferential tip and the corner portion of the protruding portion at substantially right angles.

In the third embodiment, the protruding portion of the rotor core is not limited to the first core section 24a, but may be provided only in the second core section 24b.

The present invention is not limited to the embodiments described above but the constituent elements of the invention can be modified in various manners without departing from the spirit and scope of the invention. Various aspects of the invention can also be extracted from any appropriate combination of constituent elements disclosed in the embodiments. For example, some constituent elements may be deleted in all of the constituent elements disclosed in the embodiments. Furthermore, constituent elements described in different embodiments may be combined arbitrarily.

For example, the number of magnetic poles, the size, the shape, and the like of the rotor are not limited to the above-described embodiments, and may be variously changed depending on the design. The number of permanent magnets M disposed at each magnetic pole of the rotor is not limited to two, and can be increased if necessary. The length of protrusion of the protruding portion and the width of the opening are not limited to the examples shown in the embodiments, but can be variously changed as needed.

At each magnetic pole, not only two but three or more magnet holding slots may be provided. Furthermore, the two magnet holding slots at each magnetic pole are not limited to a symmetrical shape, but may be formed in an asymmetrical shape. For example, the opening 40 may be provided in only one of the magnet holding slots.

## Claims

1. A rotor of a rotary electrical machine, comprising:
a rotor core including a plurality of magnetic poles arranged in a circumferential direction about a central axis, and at least two magnet holding slots arranged at an interval in the circumferential direction for each of the magnetic poles; and
a plurality of permanent magnets disposed in the magnet holding slots, respectively,
at least one of the magnet holding slots including a magnet loading area where the permanent magnet is arranged, a magnetic cavity located between the magnet loading area and an outer circumference of the rotor core, and an opening which opens to the magnetic cavity and the outer circumference of the rotor core,
at the magnetic pole, the rotor core comprising a protruding portion including an outer surface which extends to the opening continuously with an outer circumferential surface of the rotor core, an end surface which intersects the outer surface at angle 90±10° to face the opening, and an inner surface which intersects the end surface to form an edge of the magnetic cavity, a width in the circumferential direction of the opening being smaller than a width in the circumferential direction of the magnetic cavity.

2. The rotor of the rotary electrical machine of claim 1, wherein
at the protruding portion, the end surface and the inner surface intersect at angle 90±10°.

3. The rotor of the rotary electrical machine of claim 1, wherein
at the protruding portion, a corner portion where the end surface and the inner surface intersect is curved in an arcuate shape.

4. The rotor of the rotary electrical machine of claim 1, wherein
at least one of the magnet holding slots, the rotor core comprises a first protruding portion located on one side of the circumferential direction of the opening and a second protruding portion located on the other side of the circumferential direction of the opening,
the first protruding portion includes a first outer surface which extends to the opening continuously with an outer circumferential surface of the rotor core, a first end surface which intersects the first outer surface at angle 90±10° to face the opening, and a first inner surface which intersects the first end surface to form an edge of the magnetic cavity, and
the second protruding portion includes a second outer surface which extends to the opening continuously with an outer circumferential surface of the rotor core, a second end surface which intersects the second outer surface at angle 90±10° to face the opening, and a second inner surface which intersects the second end surface to form an edge of the magnetic cavity.
